# EUROPEAN PATENT APPLICATION

(11) **EP 4 613 519 A1**
(43) Date of publication of application: **10.09.2025**
(21) Application number: 23884522.6
(22) Date of filing: 27.09.2023
(51) Int. Cl.: B60H 1/32

(54) **AIR CONDITIONING SYSTEM AND INTERNAL HEAT EXCHANGER THEREOF, VEHICLE HEAT MANAGEMENT SYSTEM, AND VEHICLE**

(30) Priority: 31.10.2022 CN 202211351151
(71) Applicant: Nio Technology (Anhui) Co., Ltd, Hefei City, Anhui 230601 (CN)
(72) Inventor: HUANG, Haisheng, Shanghai 201804 (CN); WEN, Baoping, Shanghai 201804 (CN); WANG, Lei, Shanghai 201804 (CN)
(74) Representative: Vossius & Partner Patentanwälte Rechtsanwälte mbB
(86) International application number: PCT/CN2023/121865
(87) International publication number: WO 2024/093590

(57) **Abstract**

The invention relates to the technical field of vehicle thermal management, and particularly provides an air-conditioning system and an internal heat exchanger thereof, a vehicle thermal management system, and a vehicle. The air-conditioning system includes a condenser, an evaporator, and a pipeline. The pipeline includes a high-pressure part corresponding to a high-pressure refrigerating medium on a downstream side of the condenser and a low-pressure part corresponding to a low-pressure refrigerating medium on a downstream side of the evaporator. The internal heat exchanger includes a first refrigerating medium passage in communication with the high-pressure part and a second refrigerating medium passage in communication with the low-pressure part, so as to enable heat exchange between the refrigerating medium flowing through the first refrigerating medium passage and the refrigerating medium flowing through the second refrigerating medium passage. The internal heat exchanger includes a plate-shaped base on which at least a part of the first and second refrigerating medium passages is formed. With such a configuration, a possible structural form of the internal heat exchanger is provided.

## Description

### CROSS-REFERENCE TO RELATED APPLICATION

The invention claims the priority to Chinese Patent Application No. CN 202211351151.2, filed on October 31, 2022, and entitled "AIR-CONDITIONING SYSTEM AND INTERNAL HEAT EXCHANGER THEREOF, VEHICLE THERMAL MANAGEMENT SYSTEM, AND VEHICLE", which is incorporated herein by reference in its entirety.

### TECHNICAL FIELD

The invention relates to the technical field of vehicle thermal management, and particularly provides an air-conditioning system and an internal heat exchanger thereof, a vehicle thermal management system, and a vehicle.

### BACKGROUND ART

An air-conditioning system of a vehicle is mainly used for providing cold and heat for an internal compartment space of a cab and passenger compartment, and mainly includes a refrigerant (refrigerating medium) circulation loop composed of a compressor, a condenser, a throttling component and an evaporator. There are two ways to provide the cold and the heat for the internal compartment space of the cab and passenger compartment: one way is that both the cold and the heat are obtained by running the refrigerant circulation loop; and the other way is that only the cold is obtained by running the refrigerant circulation loop, and the heat is obtained by configuring a PTC in an air-conditioning box that is in communication with the internal compartment space and then releasing heat to the internal compartment space by means of PTC heating.

With the development of electric vehicles, in order to improve their driving range, there are requirements such as cooling heat generating components such as motors, and heating or cooling power batteries in order to keep them within a certain temperature range. Considering that the cold and the heat may be interchanged within a vehicle, functions related to the heat/cold are integrated into a vehicle thermal management system. For example, the vehicle thermal management system includes a refrigerant circulation loop, a coolant circulation loop, and a heat exchanger that allows heat exchange therebetween. The existing thermal management system has different degrees of single-piece design and decentralized arrangement, which usually leads to an increase in air-conditioning pipelines, cooling pipelines, and vehicle wiring harnesses, etc. This inevitably leads to a decrease in the (front compartment) space utilization of the electric vehicles. Therefore, how to improve the integration level of the vehicle thermal management system is an urgent problem to be solved. In other words, there is still room for improvement in how to further improve the integration level of the vehicle thermal management system.

Accordingly, there is a need in the art for a new technical solution to solve the above problem.

### SUMMARY

The invention is proposed in order to solve the technical problem described above at least to some extent.

In a first aspect, the invention provides an internal heat exchanger of an air-conditioning system. The air-conditioning system includes a condenser, an evaporator, and a pipeline, where the pipeline includes a high-pressure part corresponding to a high-pressure refrigerating medium on a downstream side of the condenser and a low-pressure part corresponding to a low-pressure refrigerating medium on a downstream side of the evaporator. The internal heat exchanger includes a first refrigerating medium passage in communication with the high-pressure part and a second refrigerating medium passage in communication with the low-pressure part, so as to allow heat exchange between the refrigerating medium flowing through the first refrigerating medium passage and the refrigerating medium flowing through the second refrigerating medium passage. The internal heat exchanger includes a plate-shaped base on which at least a part of the first and second refrigerating medium passages is formed.

With such a configuration, a possible structural form of the internal heat exchanger is provided.

As compared to a conventional coaxial tube, the way of forming passages in the plate-shaped base enables a more flexible arrangement of the passages having a heat exchange relationship. For example, the streamline, cross-section shape/size and length of the passages and their arrangement positions in the plate-shaped base may be set flexibly.

For the internal heat exchanger as described above, in a possible implementation, the first refrigerating medium passage and/or the second refrigerating medium passage includes at least one section; and in the case where the first refrigerating medium passage or the second refrigerating medium passage includes a plurality of sections, at least some of the plurality of sections are the same or different from each other.

With such a configuration, a specific configuration way of the first refrigerating medium passage and the second refrigerating medium passage is provided.

For example, the differences between the sections may lie in the above-mentioned streamline, cross-section shape/size and length and their arrangement positions in the plate-shaped base.

For the internal heat exchanger as described above, in a possible implementation, the first refrigerating medium passage and the second refrigerating medium passage have a common wall, so as to enable heat exchange between the refrigerating medium flowing through the first refrigerating medium passage and the refrigerating medium flowing through the second refrigerating medium passage via the wall.

With such a configuration, a specific structure by means of which the head exchange is carried out between the refrigerating media flowing through the two refrigerating medium passages is provided.

It should be understood that those skilled in the art may determine the structural form of the wall and parameters such as thickness and material according to actual requirements so as to enable a sufficient heat exchange between the refrigerating media flowing through the two refrigerating medium passages.

For the internal heat exchanger as described above, in a possible implementation, the first refrigerating medium passage and the second refrigerating medium passage are formed on the plate-shaped base with streamlines having substantially the same trends.

With such a configuration, a specific distribution form of the first refrigerating medium passage and the second refrigerating medium passage on the plate-shaped base is provided.

For the internal heat exchanger as described above, in a possible implementation, at least a part of the refrigerating medium flowing through the first refrigerating medium passage and at least a part of the refrigerating medium flowing through the second refrigerating medium passage flow in opposite directions.

With such a configuration, a specific structural form in which the first refrigerating medium passage and the second refrigerating medium passage form the internal heat exchanger is provided.

In a second aspect, the invention provides an air-conditioning system, including an internal heat exchanger of an air-conditioning system according to any one of the foregoing implementations.

It should be understood that the air-conditioning system has all technical effects of the internal heat exchanger of an air-conditioning system according to any one of the foregoing implementations, which will not be repeated herein.

In a third aspect, the invention provides a vehicle thermal management system, including a controller, a first thermal management unit using a refrigerating medium as a circulation medium, and a second thermal management unit using a coolant as a circulation medium, where the first thermal management unit includes a plurality of first thermal management components and a refrigerating medium flow channel plate, a plurality of refrigerating medium circulation loops are formed in the refrigerating medium flow channel plate, and the first thermal management components having a connection relationship are connected to each other by means of the corresponding refrigerating medium circulation loop; where the second thermal management unit includes a plurality of second thermal management components and a coolant flow channel plate, a plurality of coolant circulation loops are formed in the coolant flow channel plate, and the second thermal management components having a connection relationship are connected to each other by means of the corresponding coolant circulation loop; and where the first thermal management components include electronic expansion valves and/or electronic refrigerant valves, coils of at least some of the electronic expansion valves and/or electronic refrigerant valves are positioned close to the controller, and the refrigerating medium flow channel plate is the plate-shaped base in the internal heat exchanger of an air-conditioning system according to any one of the forgoing implementations.

Such a configuration enables the integration of the thermal management system.

It should be understood that the vehicle thermal management system has all technical effects of the internal heat exchanger of an air-conditioning system according to any one of the foregoing implementations, which will not be repeated herein.

It should be understood that those skilled in the art may determine the specific configuration of the first/second thermal management unit and its specific principle that satisfies the corresponding thermal management requirements, and the like, according to actual requirements. Accordingly, those skilled in the art may determine the specific arrangement form of the refrigerating medium/coolant circulation loops in the refrigerating medium/coolant flow channel plate, the specific connection mode between the relevant first/second thermal management components and the refrigerating medium/coolant circulation loops, etc., according to actual requirements.

The coils of the electronic expansion valves and/or electronic refrigerant valves are positioned close to the controller, and the controller is proximally integrated with the coils of the electronic expansion valves and/or electronic refrigerant valves, which not only saves connecting wiring harnesses to the greatest extent, but also ensures that the control precision and stability of the electronic expansion valves and/or electronic refrigerant valves can be maintained at the same level as the performance of the valves.

It should be understood that those skilled in the art may determine the degree of proximity and the manner of proximity according to actual requirements. Illustratively, for example, the coils of the electronic expansion valves and/or electronic refrigerant valves may be connected to the existing structure of the controller, or an intermediate structure may be added, and integration in proximity may be realized by connecting the controller and each of the coils of the electronic expansion valves and/or electronic refrigerant valves by means of the intermediate structure, etc.

It should be understood that those skilled in the art may determine the number of electronic expansion valves and/or electronic refrigerant valves to be proximally integrated with the controller and their specific functions in the first thermal management unit, etc., according to actual requirements. In other words, those skilled in the art may proximally integrate all or some of the electronic expansion valves and/or electronic refrigerant valves to the controller according to actual requirements. For example, in the vehicle thermal management system based on a first principle diagram, the first thermal management unit includes M electronic expansion valves and/or electronic refrigerant valves, and coils of the M valves are all proximally integrated with the controller; in the vehicle thermal management system based on a second principle diagram, the first thermal management unit includes N electronic expansion valves and/or electronic refrigerant valves, and coils of some of the N valves are proximally integrated with the controller; etc.

For the vehicle thermal management system as described above, in a possible implementation, the refrigerating medium flow channel plate is connected to the coolant flow channel plate, and the controller is fixedly connected to the refrigerating medium flow channel plate and/or the coolant flow channel plate.

With such a configuration, a specific connection mode of the vehicle thermal management system after integration is provided.

For the vehicle thermal management system as described above, in a possible implementation, the refrigerating medium flow channel plate and the coolant flow channel plate are connected to each other by means of multi-point connection in a thickness direction close to each other.

With such a configuration, a specific connection mode between the refrigerating medium flow channel plate and the coolant flow channel plate is provided.

For the vehicle thermal management system as described above, in a possible implementation, the refrigerating medium flow channel plate includes a refrigerating medium body part and a refrigerating medium cover plate part, the refrigerating medium circulation loops being formed between the refrigerating medium body part and the refrigerating medium cover plate part; and/or the coolant flow channel plate includes a coolant body part and a coolant cover plate part, the coolant circulation loops being formed by the coolant body part and the coolant cover plate part.

With such a configuration, a specific structural form of the refrigerating medium/coolant flow channel plate is provided.

It should be understood that those skilled in the art may determine a specific construction way of the circulation loops according to actual situations. Illustratively, a part (half groove) of a groove is provided in each of the body part and the cover plate part, and the two half grooves are combined to form a corresponding channel.

It should be understood that those skilled in the art may determine the material, structural form, number of the refrigerating medium/coolant (body and cover plate) parts, the connection relationship therebetween, etc., according to actual requirements.

For the vehicle thermal management system as described above, in a possible implementation, refrigerating medium flow channels corresponding to the refrigerating medium circulation loops are formed in the refrigerating medium body part, and the refrigerating medium cover plate part covers the refrigerating medium flow channels; and/or coolant flow channels corresponding to the coolant circulation loops are provided in the coolant body part, and the coolant cover plate part covers the coolant flow channels.

With such a configuration, a specific construction way of the refrigerating medium/coolant flow channel is provided.

For the vehicle thermal management system as described above, in a possible implementation, refrigerating medium flow channel openings are provided in the refrigerating medium flow channel plate at positions required to be docked with the first thermal management components such that the first thermal management components having a connection relationship are docked with the refrigerating medium flow channel plate via the refrigerating medium flow channel openings and then are in communication with each other by means of the corresponding refrigerating medium circulation loop; and/or coolant flow channel openings are provided in the coolant flow channel plate at positions required to be docked with the second thermal management components such that the second thermal management components having a connection relationship are docked with the coolant flow channel plate via the coolant flow channel openings and then are in communication with each other by means of the corresponding coolant circulation loop.

With such a configuration, a specific connection mode between the first/second thermal management components and the refrigerating medium/coolant flow channel plate is provided.

For the vehicle thermal management system as described above, in a possible implementation, the first thermal management components are in sealed connection with the refrigerating medium flow channel plate at positions corresponding to the refrigerating medium flow channel openings; and/or the second thermal management components are in sealed connection with the coolant flow channel plate at positions corresponding to the coolant flow channel openings.

With such a configuration, a specific connection mode between the first/second thermal management components and the refrigerating medium/coolant flow channel plate at the refrigerating medium/coolant flow channel openings is provided.

For the vehicle thermal management system as described above, in a possible implementation, the first thermal management components include an internal heat exchanger including a first refrigerating medium passage corresponding to a high-pressure part on a downstream side of a condenser and a second refrigerating medium passage corresponding to a low-pressure refrigerating medium on a downstream side of an evaporator, where the first refrigerating medium passage and the second refrigerating medium passage are formed within the refrigerating medium flow channel plate and have a wall capable of transferring heat.

With such a configuration, the in-depth integration of the vehicle thermal management system is realized by transforming the first thermal management components themselves.

For the vehicle thermal management system as described above, in a possible implementation, the controller is a thermal management domain controller, the thermal management domain controller includes a PCBA board, and the coils of the electronic expansion valves and/or electronic refrigerant valves are integrated with the controller in a manner close to the PCBA board.

With such a configuration, a specific implementation of the coils of the electronic expansion valves and/or electronic refrigerant valves being close to the controller is provided. It should be understood that those skilled in the art may determine the specific structure on which the realization of the proximity of the two depends, the specific degree of proximity, etc., according to actual requirements. Illustratively, an intermediate structure arranged adjacent to the PCBA board is configured and the coils of the electronic expansion valves and/or electronic refrigerant valves are arranged on the intermediate structure.

For the vehicle thermal management system as described above, in a possible implementation, the controller includes a housing, the coils of the electronic expansion valves and/or electronic refrigerant valves and the PCBA board are arranged in the housing.

With such a configuration, a specific structural form in which the thermal management domain controller is involved in the integration is provided.

In a fourth aspect, the invention provides a vehicle, including a vehicle thermal management system according to any one of the foregoing implementations.

It should be understood that the vehicle has all technical effects of the internal heat exchanger of an air-conditioning system and the vehicle thermal management system according to any one of the foregoing implementations, which will not be repeated herein.

### BRIEF DESCRIPTION OF THE DRAWINGS

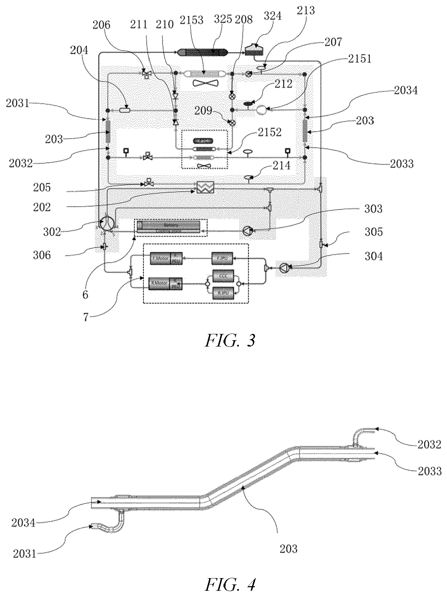

Preferred implementations of the invention are described below in conjunction with a principle diagram (FIG. 3) of a specific vehicle thermal management system and with reference to the accompanying drawings, in which:
FIG. 1 shows a schematic structure diagram of a thermal management integration module in a vehicle thermal management system (hereinafter referred to as a thermal management integration module for short), viewed from one side thereof (the refrigerating medium flow channel plate side), according to an embodiment of the invention;
FIG. 2 shows a schematic structure diagram of the thermal management integration module, viewed from the other side thereof (the coolant flow channel plate side), according to an embodiment of the invention;
FIG. 3 shows a schematic principle diagram of a vehicle thermal management system on which the thermal management integration module is based, according to an embodiment of the invention;
FIG. 4 shows a schematic structure diagram of an existing example of an internal heat exchanger in the form of a coaxial tube (referred to as a coaxial tube for short);
FIG. 5 shows a schematic structure diagram of an internal heat exchanger in a thermal management integration module according to an embodiment of the invention;
FIG. 6 shows a schematic structure diagram of a refrigerating medium flow channel plate of a thermal management integration module, viewed from one side thereof, according to an embodiment of the invention;
FIG. 7 shows a schematic structure diagram of the refrigerating medium flow channel plate of the thermal management integration module, viewed from the other side thereof, according to an embodiment of the invention;
FIG. 8 shows a schematic structure diagram of a coolant flow channel plate of a thermal management integration module, viewed from one side thereof, according to an embodiment of the invention;
FIG. 9 shows a schematic structure diagram of the coolant flow channel plate of the thermal management integration module, viewed from the other side thereof, according to an embodiment of the invention;
FIG. 10 shows a schematic structure diagram of a thermal management domain controller and wiring harnesses of a thermal management integration module, viewed from one side thereof, according to an embodiment of the invention;
FIG. 11 shows a schematic structure diagram of the thermal management domain controller and wiring harnesses of the thermal management integration module, viewed from the other side thereof, according to an embodiment of the invention;
FIG. 12 shows a schematic structure diagram of a thermal management domain controller of a thermal management integration module according to an embodiment of the invention;
FIG. 13 shows a schematic structure diagram of a vibration isolation system of a thermal management integration module according to an embodiment of the invention;
FIG. 14 shows a schematic diagram of a flow direction of a refrigerating medium in a thermal management integration module in a passenger compartment refrigerating mode according to an embodiment of the invention;
FIG. 15 shows a schematic diagram of a flow direction of a refrigerating medium in a thermal management integration module in a power battery cooling mode according to an embodiment of the invention;
FIG. 16 shows a schematic diagram of a flow direction of a refrigerating medium in a thermal management integration module in an air source heat pump heating mode according to an embodiment of the invention;
FIG. 17 shows a schematic diagram of a flow direction of a refrigerating medium in a thermal management integration module in a waste heat recovery heat pump heating mode according to an embodiment of the invention;
FIG. 18 shows a schematic diagram of a flow direction of a coolant in a thermal management integration module in Mode 1 according to an embodiment of the invention;
FIG. 19 shows a schematic diagram of a flow direction of a coolant in a thermal management integration module in Mode 2 according to an embodiment of the invention;
FIG. 20 shows a schematic diagram of a flow direction of a coolant in a thermal management integration module in Mode 3 according to an embodiment of the invention;
FIG. 21 shows a schematic diagram of a flow direction of a coolant in a thermal management integration module in Mode 4 according to an embodiment of the invention;
FIG. 22 shows a schematic diagram of a flow direction of a coolant in a thermal management integration module in Mode 5 according to an embodiment of the invention;
FIG. 23 shows a schematic diagram of a flow direction of a coolant in a thermal management integration module in Mode 6 according to an embodiment of the invention;
FIG. 24 shows a schematic comparison diagram of a thermal management integration module in terms of reducing the length of an air-conditioning pipeline as compared to a non-integration solution, according to an embodiment of the invention;
FIG. 25 shows a schematic comparison diagram of a thermal management integration module in terms of reducing the length of a cooling pipeline as compared to a non-integration solution, according to an embodiment of the invention; and
FIG. 26 shows a schematic comparison diagram of a thermal management integration module in terms of reducing wiring harnesses and connectors as compared to a non-integration solution, according to an embodiment of the invention.

### DETAILED DESCRIPTION OF EMBODIMENTS

Preferred implementations of the invention will be described below with reference to the accompanying drawings. Those skilled in the art should understand that these implementations are merely used to explain the technical principles of the invention, and are not intended to limit the scope of protection of the invention. For example, although this description is introduced in combination with pipelines of specific shapes and components such as a compressor and a heat exchanger that are arranged at clear positions and adapted to a principle diagram of a thermal management system, this is not intended to limit the scope of protection of the invention. Without departing from the principle of the invention, those skilled in the art may make reasonable changes thereto, such as integrating the relevant pipelines and components in accordance with any principle diagram capable of implementing the vehicle thermal management, and changing the corresponding pipelines from zigzag to slanted, or appropriately adjusting the radial dimension/length (straight length or total length) of the pipelines, etc., according to actual requirements.

It should be noted that in the description of the invention, the terms, such as "center", "upper", "lower", "left", "right", "vertical", "horizontal", "inner" and "outer", that indicate directions or positional relationships are based on the directions or positional relationships shown in the accompanying drawings only for convenience of description, and do not indicate or imply that the device or element must have a specific orientation, be constructed and operated in a specific orientation, and therefore cannot be construed as limitation to the invention. In addition, the terms "first" and "second" are used for descriptive purposes only, and cannot be construed as indicating or implying relative importance.

In addition, it should also be noted that, in the description of the invention, the terms "mount", "provide" and "connect" should be interpreted in a broad sense unless explicitly defined and limited otherwise, which, for example, may mean a fixed connection, a detachable connection or an integral connection; and may be a direct connection, an indirect connection by means of an intermediary, or internal communication between two elements. For those skilled in the art, the specific meanings of the foregoing terms in the invention can be interpreted according to a specific situation.

In addition, for better description of the invention, many details are provided in the following specific implementations, and those skilled in the art should understand that, without some specific details, the invention can still be implemented. In some instances, vehicle thermal management principles, etc. well known to those skilled in the art are not described in detail in order to highlight the gist of the invention.

A vehicle thermal management system is mainly used for coordinating cold and heat to meet the requirements for the cold and the heat within the vehicle, such as refrigerating/heating requirements of an internal compartment space, the cooling requirements of a motor, and heating/cooling requirements of a power battery. A part of the cold/heat is supplied by, for example, running a refrigerant circulation loop, activating a PTC, a coolant carrying the cold by itself, etc. A part of the heat is obtained by, for example, recovering the cold/heat from other parts. A thermal management integration module may be formed by integrating some of components of the vehicle thermal management system.

For example, in this example, parts covered by a shaded area in FIG. 3 are thermal management components and pipelines that participate in constituting the thermal management integration module. It should be understood that those skilled in the art may adjust the components/pipelines that participate/do not participate in constituting the thermal management integration module and their positions according to actual requirements.

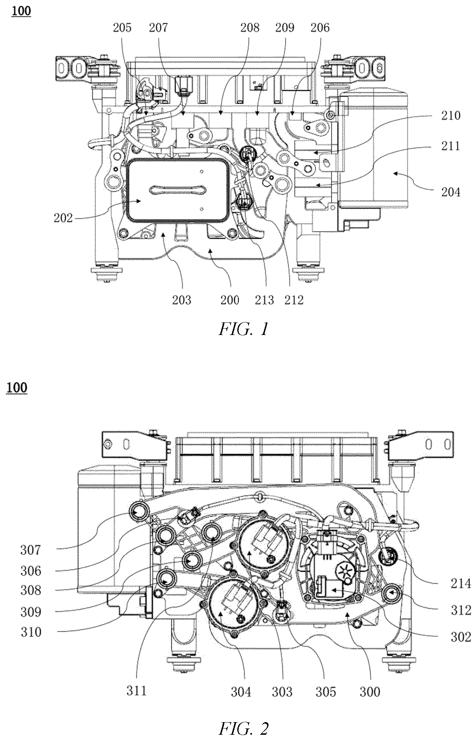

The invention will be described below with reference to all or part of FIGS. 1 to 26.

Referring mainly to FIGS. 1 to 3, in a possible implementation, a thermal management integration module 100 mainly includes a refrigerating medium flow channel plate 200, a coolant flow channel plate 300, and a plurality of thermal management components constituting a vehicle thermal management system.

A plurality of (sections of) refrigerating medium circulation loops 201 are formed in the refrigerating medium flow channel plate 200. Specifically, based on the schematic principle diagram of the vehicle thermal management system shown in FIG. 3, when a communication relationship is required between different components on the refrigerating medium side, the communication between the two may be realized by the refrigerating medium circulation loop 201 formed at the corresponding position on the refrigerating medium flow channel plate. Similarly, a plurality of coolant circulation loops 301 are formed in the coolant flow channel plate 300. When a communication relationship is required between different components on the coolant side, the communication between the two may be realized by the coolant circulation loop 301 formed at the corresponding position on the coolant flow channel plate.

Moreover, the refrigerating medium flow channel plate 200 and the coolant flow channel plate 300 serve as carriers (mounting carriers) for the entire thermal management integration module 100, and may be used for sharing a task of mounting the plurality of thermal management components described above. The refrigerating medium flow channel plate 200 and the coolant flow channel plate 300 are key constituent components in the thermal management integration module of the invention, and allow the plurality of thermal management components to be mounted on the refrigerating medium flow channel plate 200 or the coolant flow channel plate 300 according to actual requirements while enabling the connection relationships that are consistent with the principle diagram of the vehicle thermal management system. On this basis, the thermal management components having a communication relationship may be connected to each other by means of the refrigerating medium circulation loop 201 or the coolant circulation loop 301. The same functions as those of a vehicle thermal management system in decentralized arrangement may be realized by designing the mounting positions of the thermal management components on the refrigerating medium flow channel plate 200/coolant flow channel plate 300 and the loops in the refrigerating medium flow channel plate 200 and the coolant flow channel plate 300, and by connecting the loops in the refrigerating medium flow channel plate 200 and the coolant flow channel plate 300 to the above-mentioned compressor and external heat exchanger, and a condenser/evaporator in an air-conditioning box, etc.

It should be understood that the principle diagram of the vehicle thermal management system in this embodiment is only one of the possible forms of the principle diagram of vehicle thermal management in practical applications. In other words, the loops inside the refrigerating medium flow channel plate 200 and the coolant flow channel plate 300, the types/number of thermal management components and their mounting positions on the refrigerating medium flow channel plate or the coolant flow channel plate may be flexibly adjusted according to the flow modes of a refrigerating medium and a coolant in any specific principle diagram of the vehicle thermal management system in practical applications, so as to realize thermal management for the vehicle on the basis of ensuring the pipeline connection between the thermal management components.

In a possible implementation, the refrigerating medium flow channel plate 200 may be made of Al material. Such a material is selected so as to avoid refrigerating medium leakage and reduce its own weight and also to ensure that the refrigerating medium flow channel plate 200 has sufficient strength, thereby improving its structural stability and durability as a main carrier of the thermal management integration module 100. In order to facilitate the molding of the refrigerating medium flow channel plate 200, a split molding method may be used. Illustratively, for example, the refrigerating medium flow channel plate 200 may be divided into a refrigerating medium body part and a refrigerating medium cover plate part in a thickness direction thereof, and the refrigerating medium circulation loops 201 having openings are formed on the refrigerating medium body part. For example, the refrigerating medium body part may be molded by a process such as hot forging, cold forging, or casting. The refrigerating medium cover plate part may be molded by a process such as sheet metal stamping. For example, after the refrigerating medium body part is molded, the body part and the refrigerating medium cover plate part are fixedly connected by means of welding, etc., so as to obtain the refrigerating medium flow channel plate 200 of the invention. The welding means may include, but are not limited to, vacuum welding, friction welding, laser welding, etc.

In a possible implementation, the coolant flow channel plate 300 may be made of a thermal insulation material such as PP and PA66. Such a material is selected so as to ensure that the coolant flow channel plate has sufficient strength while ensuring the thermal insulation performance of the coolant flow channel plate 300. Similarly, in order to facilitate the molding of the coolant flow channel plate 300, a split molding method may also be used. Illustratively, for example, the coolant flow channel plate 300 is also divided into a coolant body part and a coolant cover plate part in a thickness direction thereof, and the coolant circulation loops 301 having openings are formed on the coolant body part. For example, after molded by an injection molding process, the coolant body part and the coolant cover plate part may be fixedly connected by welding such as heat welding, friction welding and laser welding as described above, so as to obtain the coolant flow channel plate 300 of the invention.

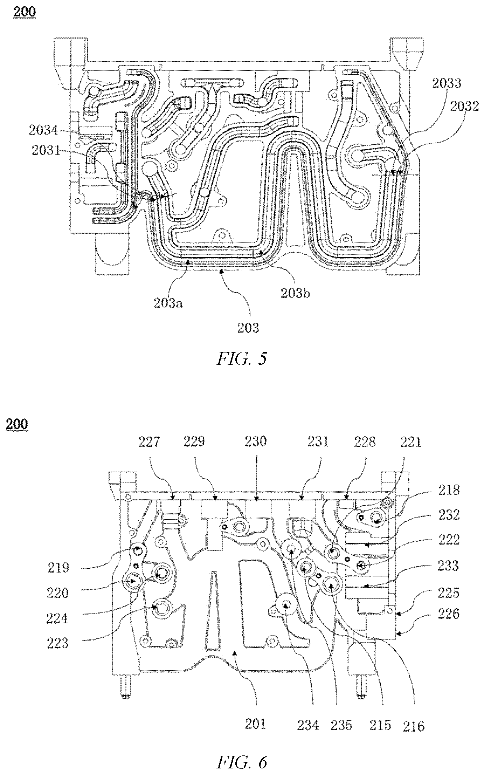

The refrigerating medium flow channel plate 200 and the coolant flow channel plate 300 are manufactured and then fixedly connected. For example, referring mainly to FIG. 5, the coolant flow channel plate 300 is fixedly connected to the refrigerating medium flow channel plate 200 by means of multi-point connection. Illustratively, the multi-point connection means connecting the refrigerating medium flow channel plate 200 to the coolant flow channel plate 300 at a plurality of mounting points by means of threaded connection. As mentioned above, the thermal management components included in the thermal management module and the communication relationships between the plurality of thermal management components may be selected according to actual requirements of the vehicle thermal management (principle diagrams of different vehicle thermal management systems). On this basis, on the premise of being able to satisfy the connection relationships corresponding to the principle diagram, the mounting positions of the respective thermal management components on the refrigerating medium flow channel plate 200 or the coolant flow channel plate 300 may be flexibly determined according to the connection relationships of the thermal management components in the corresponding principle diagram of the vehicle thermal management and details such as the contours/dimensions of the thermal management components selected actually. After the mounting positions are determined, it is only necessary to leave fixing structures adapted to the thermal management components at the corresponding mounting positions on the refrigerating medium flow channel plate 200 or the coolant flow channel plate 300.

Referring mainly to FIG. 3, in a possible implementation, an upper part of the vehicle thermal management system is a part related to the refrigerating medium. For example, an evaporator/PTC is in communication with the internal compartment space so as to be able to provide the cold/heat to the driver and passenger in the internal compartment space. A lower part is a part related to the coolant. For example, the coolant after temperature adjustment enables insulation treatment for the power battery. Heat exchange between the refrigerating medium and the coolant may be realized between two components via a heat exchanger 202, thus enabling thermal management for the vehicle.

Referring mainly to FIG. 3, in a possible implementation, insulating components of the vehicle to be cooled/heated mainly include a power battery 6, and heat generating components to be cooled mainly include a motor. As in this example, the heat generating components to be cooled include a front/rear motor, a front/rear motor controller, and a front/rear smart power distribution unit central processing unit (hereinafter collectively referred to as a motor 7). The vehicle thermal management system includes a first part related to the refrigerating medium and a second part related to the coolant.

In a possible implementation, the first part mainly includes a heat exchanger 202, an internal heat exchanger 203, a liquid storage and drying tank 204, a first electronic expansion valve 205, a second electronic expansion valve 206, a first electronic refrigerant valve 207, a second electronic refrigerant valve 208, a third electronic refrigerant valve 209, a first one-way valve 210, a second one-way valve 211, a first pressure-temperature sensor 212, a second pressure-temperature sensor 213, and a third pressure-temperature sensor 214. In addition, the first part further includes a compressor 2151, an air-conditioning box 2152 (which includes a PTC capable of directly running to generate heat, a condenser (below the PTC) capable of releasing heat to the internal compartment space, and an evaporator (below the condenser) capable of releasing cold to the internal compartment space), and an external heat exchanger that is in communication with an environment outside the vehicle.

An exhaust port of the compressor is connected to a second side of the external heat exchanger and a second side of the condenser via the second electronic refrigerant valve 208 and the third electronic refrigerant valve 209, respectively. A first side of the external heat exchanger is connected to a first side of the condenser, and the first one-way valve 210 that only allows the refrigerating medium to flow out of the external heat exchanger and the second one-way valve 211 that only allows the refrigerating medium to flow out of the evaporator are sequentially arranged between the first side of the external heat exchanger and the first side of the condenser.

The first side of the external heat exchanger is sequentially connected to an inlet of a high-pressure part of the internal heat exchanger 203 via the second electronic expansion valve 206, and at an outlet of the high-pressure part of the internal heat exchanger 203, on the one hand, to an inlet of a low-pressure part of the internal heat exchanger 203 via the evaporator in the air-conditioning box, and, on the other hand, to the inlet of the low-pressure part of the heat exchanger 203 via the first electronic expansion valve 205 and a refrigerating medium flow channel of the internal heat exchanger in sequence. An outlet of the low-pressure part of the internal heat exchanger 203 is connected to a return port of the compressor. The second side of the external heat exchanger is connected to the return port of the compressor via the first electronic refrigerant valve 207.

In a possible implementation, an inlet of the liquid storage and drying tank 204 is arranged in a pipeline between the first one-way valve 210 and the second one-way valve 211, and an outlet of the liquid storage and drying tank 204 is connected to the inlet of the high-pressure part of the internal heat exchanger 203.

In a possible implementation, the first pressure-temperature sensor 212, the second pressure-temperature sensor 213, and the third pressure-temperature sensor 214 are respectively arranged on the downstream side (between the exhaust port of the compressor and the second side of the external heat exchanger/condenser) of the exhaust port of the compressor, between the second side of the external heat exchanger and the return port of the compressor, and between a second side of the refrigerating medium flow channel of the heat exchanger and the inlet of the low-pressure part of the internal heat exchanger 203.

In addition, as in this example, an electronic expansion valve may be added between the outlet of the high-pressure part of the internal heat exchanger 203 and a first side of the evaporator, and a high-pressure fill valve may be configured in this pipeline. A low-pressure fill valve is configured between a second side of the evaporator and the inlet of the low-pressure part of the internal heat exchanger 203.

The heat generating components in the vehicle to be cooled mainly include the motors (the front motor and the rear motor), the motor controllers (of the front motor and the rear motor), and the power battery. The vehicle thermal management system includes the first part related to the refrigerating medium and the second part related to the coolant.

In a possible implementation, the second part mainly includes a multi-way valve 302 (a five-way valve is used in this example), a first water pump 303, a second water pump 304, a first water temperature sensor 305, and a second water temperature sensor 306. The five-way valve has five circulation ports respectively denoted as circulation ports (1, 2, 3, 4, 5). In addition, the second part further includes an expansion tank 324 and a radiator 325.

An outlet of the expansion tank is connected to the circulation port 1 of the multi-way valve 302 via a coolant flow channel of the heat exchanger; the outlet of the expansion tank is directly connected to the circulation port 4 of the multi-way valve 302; the outlet of the expansion tank is connected to the circulation port 5 of the multi-way valve 302 via the first water pump 303 and the power battery 7 in sequence; and the outlet of the expansion tank is connected to the circulation port 2 of the multi-way valve 302 via the second water pump 304 and two parallel branches(the path of a first branch is from the front smart power distribution unit to the front motor controller to the front motor, and the path of a second branch is from the rear smart power distribution unit/central processing unit to the rear motor controller to the rear motor) in sequence. The first water temperature sensor 305 is provided. The circulation port 3 of the multi-way valve 302 is connected to an inlet of the expansion tank via the radiator.

In a possible implementation, the first water temperature sensor 305 and the second water temperature sensor 306 are arranged in a pipeline between the outlet of the expansion tank and an inlet of the second water pump and in a pipeline between the front/rear motor and the circulation port 2, respectively.

Based on the above principle diagram, in a possible implementation, the thermal management components to be integrated in the refrigerating medium flow channel plate 200 mainly include the heat exchanger 202, the internal heat exchanger 203, the liquid storage and drying tank 204, the first electronic expansion valve 205, the second electronic expansion valve 206, the first electronic refrigerant valve 207, the second electronic refrigerant valve 208, the third electronic refrigerant valve 209, the first one-way valve 210, the second one-way valve 211, the first pressure-temperature sensor 212, the second pressure-temperature sensor 213, and the third pressure-temperature sensor 214. The thermal management components to be integrated in the coolant flow channel plate 300 mainly include the multi-way valve 302 (the five-way valve is used in this example), the first water pump 303, the second water pump 304, the first water temperature sensor 305, the second water temperature sensor 306. The manner in which the above thermal management components are integrated on/in the refrigerating medium flow channel plate 200 or the coolant flow channel plate 30, and the principle of realizing thermal management for the vehicle based on the above thermal management components (that is, the connection relationships that should exist between the thermal management components and the control logic that needs to be configured).

Two sets of heat exchangeable pipes (respectively denoted as a refrigerating medium flow channel structure and a coolant flow channel structure) are provided in the heat exchanger 202 of the heat management components, and are used for circulation of the refrigerating medium and the coolant, respectively. On this basis, for example, in a mode of cooling the power battery or the motor, etc. or in a mode of recovering waste heat of the power battery, the requirements for heat exchange between the refrigerating medium fluid and the coolant fluid may be satisfied inside the heat exchanger.

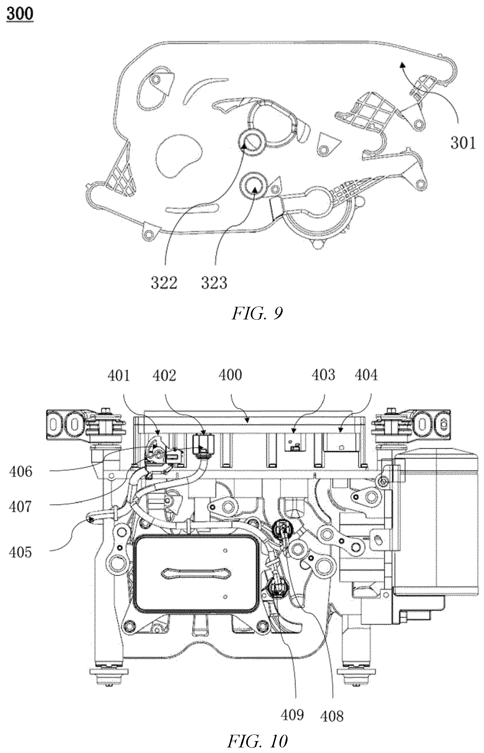

Since the heat exchanger is a structure having an association with both the refrigerating medium flow channel plate 200 and the coolant flow channel plate 300, the heat exchanger may theoretically be arranged on either one of them or between them (without being integrated) and then connected to each of them by means of a corresponding pipe and mounting carrier. In a possible implementation, the heat exchanger 202 is in communication with each of the refrigerating medium flow channel plate 200 and the coolant flow channel plate 300, and is sealed at the communication positions (hereafter referred to as communication and sealed). Moreover, the refrigerating medium flow channel structure and the refrigerating medium flow channel plate 200 form a refrigerating medium inlet and outlet loop, and the coolant flow channel structure and the coolant flow channel plate 300 form a coolant inlet and outlet loop. For example, referring mainly to FIGS. 6 and 9, in this example, the refrigerating medium flow channel structure in the heat exchanger 202 is in communication and sealed with refrigerating medium flow channel openings (223, 224) of the refrigerating medium flow channel plate 200, and the coolant flow channel structure in the heat exchanger 202 is in communication and sealed with coolant flow channel openings (322, 323) of the coolant flow channel plate 300. On this premise, the heat exchanger 202 is fixedly connected to the refrigerating medium flow channel plate 200 by means of fasteners (e.g., by means of threaded connection). Obviously, the selection of the heat exchanger 202 may be determined according to actual requirements for the heat exchange performance.

The internal heat exchanger 203 of the thermal management components is mainly used for exchanging heat between two refrigerating medium circulation loops that respectively carry a high-temperature liquid refrigerating medium and a low-temperature gaseous refrigerating medium so as to reduce the upstream subcooling of the electronic expansion valves, thereby achieving the purposes of increasing the cooling capacity of the air-conditioning system and the cooling capacity for battery cooling.

The internal heat exchanger in the existing air-conditioning system is commonly constructed in the form of a coaxial tube, specifically, heat exchange between refrigerating mediums with different temperatures is realized via a wall surface between outer and inner tubes of the coaxial tube. For example, referring to FIG. 3, the structure on the left side represents a high-pressure part of the coaxial tube, and the structure on the right side represents a low-pressure part of the coaxial tube. For example, referring to FIG. 4, an annular area on the outside of the coaxial tube is a high-pressure part of the internal heat exchanger, and a columnar area in the center is a low-pressure part of the internal heat exchanger. A high-pressure medium-temperature liquid refrigerating medium enters the internal heat exchanger from a high-pressure end inlet 2031 at a left end of the internal heat exchanger 203 and flows out of the internal heat exchanger from a high-pressure end outlet 2032 at a right end of the internal heat exchanger. A low-pressure low-temperature gaseous refrigerating medium enters the internal heat exchanger from a low-pressure end inlet 2033 at the right end of the internal heat exchanger 203 and flows out of the internal heat exchanger from a low-pressure end outlet 2034 at the left end of the internal heat exchanger.

However, in the thermal management integration module of the invention, the structure of the two refrigerating medium circulation loops is changed from the traditional structural form of coaxial tube to the wall-surface heat transfer between two of the refrigerating medium circulation loops in the refrigerating medium flow channel plate 200 (processed and molded together with the refrigerating medium circulation loops 201). For example, referring mainly to FIG. 5, two substantially W-shaped parallel refrigerating medium circulation loops (denoted as a first intermediate heat exchange section 203a and a second intermediate heat exchange section 203b, respectively) are provided in a lower area of the refrigerating medium flow channel plate 200. The lower, first intermediate heat exchange section 203a is equivalent to the high-pressure part of the coaxial tube, and the upper, second intermediate heat exchange section 203b is equivalent to the low-pressure part of the coaxial tube. The two are separated from each other by a wall in the refrigerating medium flow channel plate 200, so that as the refrigerating media in the corresponding forms flows through the intermediate heat exchange sections (203a, 203b), heat exchange between the two refrigerating media can be realized via a wall surface. In this embodiment, the intermediate heat exchange sections (203a, 203b) are two heat exchange sections with opposite flow directions.

Referring to FIG. 3, it can be seen that another section of pipeline is connected to each of two ports of the intermediate heat exchange sections (203a, 203b). Therefore, for ease of presentation, two reference lines are added to the left and right sides of the intermediate heat exchange sections (203a, 203b) (approximately corresponding to the positions having heat exchanger capacity). On this basis, in the example, the two ports corresponding to the reference line on the left side are the high-pressure end inlet 2031 and the low-pressure end outlet 2034, respectively, and the two ports corresponding to the reference line on the right side are the high-pressure end outlet 2032 and the low-pressure end inlet 2033, respectively.

It should be understood that the lower area, the W-shaped streamline, and the relative positions of the upper and lower parallel are only one implementation, and may be flexibly adjusted by those skilled in the art according to actual requirements. For example, it is possible to be at any area of the refrigerating medium flow channel plate 200, change the bend in the middle of the W shape from one to multiple, change the upper and lower parallel to the lower and upper parallel or a combination of the two (two intersecting flow paths, being upper and lower parallel before the intersection and lower and upper parallel after the intersection), etc. In addition, it is also possible to change the intermediate heat exchange sections (203a, 203b) to a combination of multiple sections. If necessary, the flow direction of the refrigerating medium within the intermediate heat exchange sections (203a, 203b) may also be adjusted.

Taking the combination of multiple sections as an example, if the design of the refrigerating medium circulation loops in the refrigerating medium flow channel plate 200 is limited (e.g., the design of a continuous intermediate heat exchange section will affect the layout of other thermal management components to a certain extent), the intermediate heat exchange sections (203a, 203b) may be changed to a combination of multiple sections, and for example, the flow direction, distribution position, and length of each section may be flexibly set according to actual requirements. In this way, high integration of the internal heat exchanger can be realized in a more flexible manner. Furthermore, such flexible settings can better assist the configuration of other thermal management components in the refrigerating medium flow channel plate 200, and thus it is expected to reduce the difficulty in realizing the integration.

In this way, heat exchange between the refrigerating medium loops may be realized inside the refrigerating medium flow channel plate 200 without using the coaxial tube for heat exchange. As compared to the method of providing the coaxial tube, the length of an air-conditioning pipeline for connecting the air-conditioning system of the vehicle to the refrigerating medium flow channel plate 200 may be effectively reduced, since there is no need for a pipeline bypass adapted to the coaxial tube in constituting the vehicle thermal management system. Obviously, details such as the cross-sectional area, specific streamline, and length of the two refrigerating medium circulation loops of the internal heat exchanger 203 may be flexibly set with reference to actual requirements for the heat exchange performance.

The following is an example in which the vehicle thermal management system is in a passenger compartment refrigerating/battery cooling mode. On the one hand, the high-pressure medium-temperature liquid refrigerating medium enters the internal heat exchanger 203 from the high-pressure end inlet 2031 in the high-pressure part (on the left side) of the internal heat exchanger 203, and flows out of the internal heat exchanger 203 from the high-pressure end outlet 2032, thereby further reducing the subcooling of the liquid refrigerating medium and increasing the cooling capacity of the air-conditioning system. On the other hand, the low-pressure low-temperature gaseous refrigerating medium in the low-pressure part (on the right side) of the internal heat exchanger 203 enters the internal heat exchanger 203 from the low-pressure end inlet 2033, and flows out of the internal heat exchanger 203 from the low-pressure end outlet 2034, thereby further increasing the superheat of the gaseous refrigerating medium to ensure that the refrigerating medium entering the return port of the compressor is in a gaseous state.

The liquid storage and drying tank 204 of the thermal management components is mainly used for gas-liquid separation of the refrigerating medium therein, ensuring that the refrigerating medium flowing out of the liquid storage and drying tank 204 is a liquid refrigerating medium. In addition, the liquid storage and drying tank 204 may also dry and filter the refrigerating medium. In this example, the liquid storage and drying tank 204 is in communication and sealed with the refrigerating medium flow channel plate 200. On this basis, a refrigerating medium inlet and outlet loop is formed by a refrigerating medium flow channel structure inside the liquid storage and drying tank 204 and the refrigerating medium flow channel plate 200. Referring mainly to FIG. **4****,** in this example, the liquid storage and drying tank 204 is in communication and sealed with refrigerating medium flow channel openings (225, 226) of the refrigerating medium flow channel plate 200, and then is fixedly connected to the refrigerating medium flow channel plate 200 by means of fasteners (e.g., by means of threaded connection). The selection of the liquid storage and drying tank 204 may be determined according to factors such as the overlapping sections of the filling platform of the vehicle thermal management system and the annual leakage amount of the refrigerating medium.

The electronic expansion valves of a plurality of refrigerating medium electronically controlled valves (the first electronic expansion valve 205, the second electronic expansion valve 206, the first electronic refrigerant valve 207, the second electronic refrigerant valve 208, and the third electronic refrigerant valve 209) of the thermal management components may realize the expansion and full closure functions of the refrigerating medium by controlling the operation the valves, and the electronic refrigerant valves may realize the full opening, expansion, and full closure functions of the refrigerating medium by controlling the operation of the valves. Each refrigerating medium electronically controlled valve is in communication and sealed with the refrigerating medium flow channel plate 200, and a refrigerating medium inlet and outlet loop is formed by a corresponding valve refrigerating medium flow channel structure and the refrigerating medium flow channel plate 200. Referring mainly to FIG. 6, in this example, the first electronic expansion valve 205, the second electronic expansion valve 206, the first electronic refrigerant valve 207, the second electronic refrigerant valve 208, and the third electronic refrigerant valve 209 are in communication and sealed with refrigerating medium flow channel openings (227, 228, 229, 230, 231) of the refrigerating medium flow channel plate 200, respectively, and then are fixedly connected to the refrigerating medium flow channel plate 200 by means of fasteners (e.g., by means of threaded connection). The selection (e.g., caliber size) of the first electronic expansion valve 205, the second electronic expansion valve 206, the first electronic refrigerant valve 207, the second electronic refrigerant valve 208, and the third electronic refrigerant valve 209 may be determined according to the flow requirements of the vehicle thermal management system.

A plurality of refrigerating medium mechanical valves (the first one-way valve 210 and the second one-way valve 211) of the thermal management components are mainly used for realizing the full opening/full closing functions of the refrigerating medium based on the change in the pressure difference before and after the valve. Each refrigerating medium mechanical valve is in communication and sealed with the refrigerating medium flow channel plate 200 and a refrigerating medium inlet and outlet loop is formed by a corresponding valve refrigerating medium flow channel structure and the refrigerating medium flow channel plate 200. Referring mainly to FIG. 6, in this example, the first one-way valve 210 and the second one-way valve 211 are in communication and sealed with refrigerating medium flow channel openings (232, 233) of the refrigerating medium flow channel plate 200, respectively, and then are fixedly connected to the refrigerating medium flow channel plate 200 by means of fasteners (e.g., by means of threaded connection). The selection (e.g., caliber size) of the first one-way valve 210 and the second one-way valve 211 may be determined according to the flow requirements of the vehicle thermal management system.

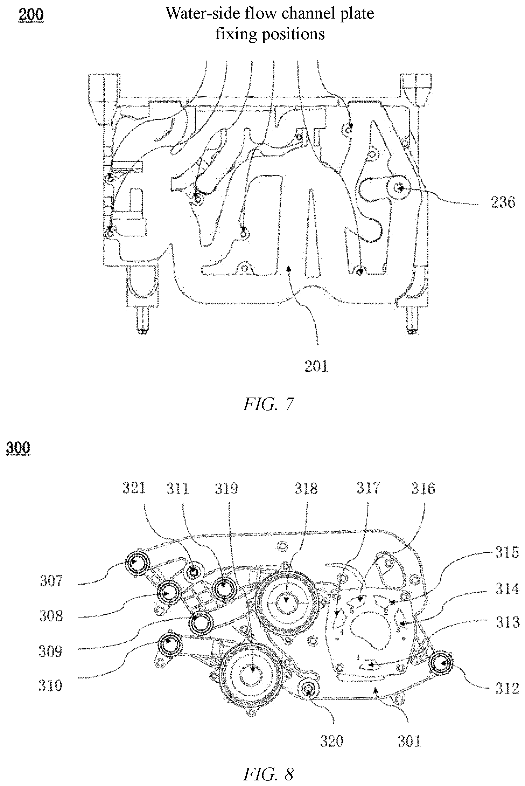

A plurality of pressure-temperature sensors (the first pressure-temperature sensor 212, the second pressure-temperature sensor 213, and the third pressure-temperature sensor 214) of the thermal management components are mainly used for measuring the pressure and temperature of the refrigerating medium flowing through the sensors by pressure-sensing and temperature-sensing components therein. Each pressure-temperature sensor is in communication and sealed with the refrigerating medium flow channel plate 200. Referring mainly to FIGS. 4 and 7, the first pressure-temperature sensor 212, the second pressure-temperature sensor 213, and the third pressure-temperature sensor 214 are in communication and sealed with refrigerating medium flow channel openings (234, 235, 236) of the refrigerating medium flow channel plate 200, and then are fixedly connected to the refrigerating medium flow channel plate 200 by means of fasteners (e.g., by means of threaded connection). The measurement ranges of the first pressure-temperature sensor 212, the second pressure-temperature sensor 213, and the third pressure-temperature sensor 214 may be designed and selected according to the pressure-temperature requirements of the vehicle thermal management system.

The multi-way valve 302 of the thermal management components is mainly used for controlling the on-off of the different modes of a cooling system. For example, in this example, the multi-way valve is a five-way valve that can be connected to a plurality of thermal management components by its five circulation ports. By switching on-off states of the circulation ports, the on-off of the corresponding modes of the cooling system can be switched. The multi-way valve is in communication and sealed with the coolant flow channel plate 300, and a coolant inlet and outlet loop is formed by a corresponding multi-way valve coolant flow channel structure and the coolant flow channel plate 300. Referring mainly to FIG. 8, the circulation ports (1, 3, 2, 5, 4) of the multi-way valve 302 are in communication and sealed with coolant flow channel openings (313, 314, 315, 316, 317) of the coolant flow channel plate 300, respectively, and then are fixedly connected to the coolant flow channel plate 300 by means of fasteners (e.g., by means of threaded connection). The number of flow channel openings of the multi-way valve 302 may be selected according to the mode switching requirements of the vehicle thermal management system.

The first water pump 303 of a pump assembly (the first water pump 303 and the second water pump 304) of the thermal management component is a power battery water pump, which is mainly used for driving the coolant in a battery cooling loop to flow, and the second water pump 304 thereof is a motor water pump, which is mainly used for driving the coolant in a motor cooling loop to flow. Both the power battery water pump and the motor water pump are in communication and sealed with the coolant flow channel plate 300, and a coolant inlet and outlet loop is formed by a corresponding water pump coolant flow channel structure and the coolant flow channel plate 300. Referring mainly to FIG. 8, the first water pump 303 and the second water pump 304 are in communication and sealed with coolant flow channel openings (318, 319) of the coolant flow channel plate 300, respectively, and then are fixedly connected to the coolant flow channel plate 300 by means of fasteners (e.g., by means of threaded connection). The sizes of the first water pump 303 and the second water pump 304 may be selected according to the coolant flow requirements of the vehicle thermal management system.

A plurality of water temperature sensors (the first water temperature sensor 305 and the second water temperature sensor 306) of the thermal management components are mainly used for measuring the temperature of fluid flowing through the sensors by temperature sensing components inside the sensors. The plurality of water temperature sensors are in communication and sealed with the coolant flow channel plate 300. Referring mainly to FIG. 8, the first water temperature sensor 305 and the second water temperature sensor 306 are in communication and sealed with coolant flow channel openings (320, 321) of the coolant flow channel plate 300, and then are fixedly connected to the coolant flow channel plate 300 by means of quick-plug connection, for example. The measurement ranges of the first water temperature sensor 305 and the second water temperature sensor 306 may be selected according to the temperature requirements of the vehicle thermal management system.

In addition, the thermal management integration module further includes a thermal management domain controller 400. For example, the thermal management domain controller is fixedly connected to the refrigerating medium flow channel plate 200 by means of fasteners (e.g., by means of threaded connection).

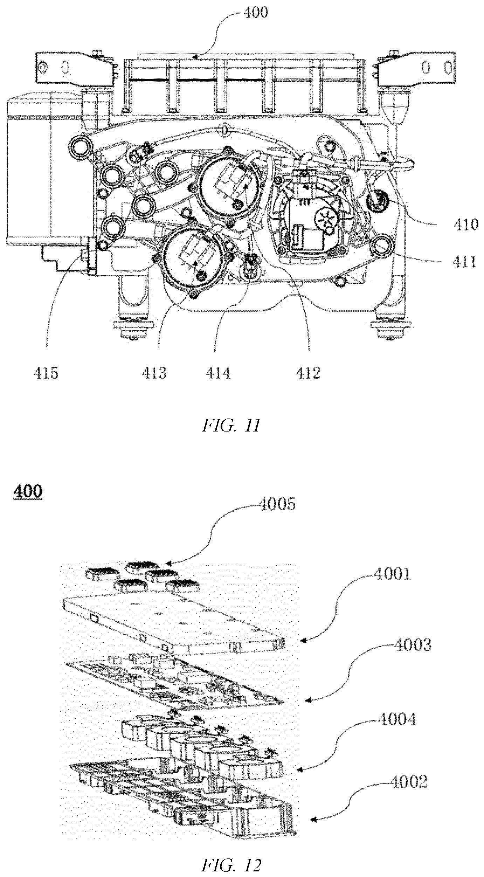

In this embodiment, the thermal management integration module of the invention includes a plurality of thermal management components that need electrical control, such as the electronic expansion valves, the electronic refrigerant valves, a water valve, the water pumps, and the sensors. While performing the structure integration of the above-mentioned thermal management components that need electrical control, the electrical control integration of these thermal management components to the thermal management domain controller is performed. Referring mainly to FIGS. 10 and 11, the thermal management domain controller 400 is mainly used for electrical control on the first electronic expansion valve 205, the second electronic expansion valve 206, the first electronic refrigerant valve 207, the second electronic refrigerant valve 208, the third electronic refrigerant valve 209, the first pressure-temperature sensor 212, the second pressure-temperature sensor 213, the third pressure-temperature sensor 214, the multi-way valve 302, the first water pump 303, the second water pump 304, the first water temperature sensor 305, and the second water temperature sensor 306.

In a possible implementation, the thermal management domain controller 400 is provided with four connectors, which are connectors (401, 402, 403, 404). The connectors (401, 402) are connected to wiring harnesses 405 corresponding to the thermal management integration module 100, and the connectors (403, 404) are used for connection to a vehicle low-voltage main wiring harness (not shown). Specifically, first ends of the wiring harnesses 405 are connected to the connectors (401, 402) of the thermal management domain controller 400 via connectors (406, 407), respectively; and second ends are connected to the first pressure-temperature sensor 212, the second pressure-temperature sensor 213, the third pressure-temperature sensor 214, the multi-way valve 302, the first water pump 303, the second water pump 304, the first water temperature sensor 305, and the second water temperature sensor 306 via connectors (408, 409, 410, 411, 412, 413, 414, 415), respectively.

Referring mainly to FIG. 12, in a possible implementation, the thermal management domain controller 400 includes a housing. The housing includes an upper housing 4001 and a lower housing 4002. For example, the upper housing is welded to the lower housing by laser. A PCBA board 4003 is arranged between the upper and lower housings, and coils 4004 of the above-mentioned five refrigerant valves (the two electronic expansion valves and the three electronic refrigerant valves) are arranged in the housing and below the PCBA board. For example, the lower housing serves as a mounting carrier, the coils of the refrigerant valves are mounted on the lower housing, each coil is in hardwired connection with the PCBA board, and the PCBA board is also mounted and secured to the lower housing 200. Heat sinks 4005 are arranged on the upper housing and are mainly used for dissipating heat from an MCU and power devices, etc. on the PCBA board 4003. By proximally integrating the PCBA board with the coils of the refrigerant valves, the connecting wiring harness between the PCBA board and the coils can be omitted to the greatest extent. On this basis, it is ensured that the control precision and stability of the refrigerant valves can be at the same level as the performance of a valve.

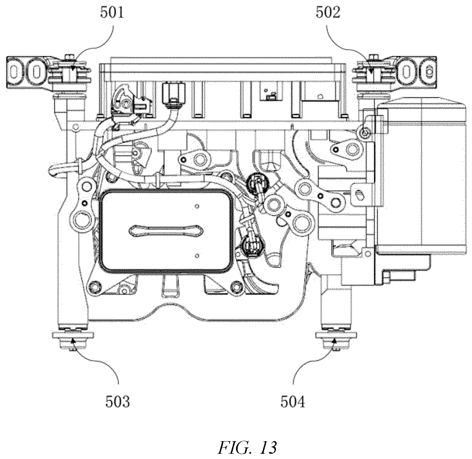

It can be seen that in this embodiment, since a plurality of thermal management components with rotational movements, such as the first water pump 303 and the second water pump 304, are integrated into the thermal management integration module 100, a vibration isolation design for the thermal management integration module is required in order to reduce the vibration transfer between these moving components and the vehicle. In a possible implementation, referring mainly to FIG. 13, a vibration isolation system including one or more vibration isolation structures may be configured on the thermal management integration module 100. For example, in this example, there are four vibration isolation structures. Specifically, one vibration isolation structure is configured at either of the left and right ends of the upper side of the thermal management integration module. For example, the two vibration isolation structures are vibration isolation bushings, denoted as vibration isolation bushings (501, 502). The vibration isolation bushings (501, 502), as the main load-bearing and vibration isolation components in this embodiment, are screwed to the vehicle. One vibration isolation structure is also configured at either of the left and right ends of the lower side of the thermal management integration module. For example, these two vibration isolation structures are vibration isolation rubber pads, denoted as vibration isolation rubber pads (503, 504). The vibration isolation rubber pads (503, 504), as auxiliary positioning and vibration isolation components in this embodiment, are in limited fitting with the vehicle.

Obviously, the vibration isolation bushings (501, 502) and the vibration isolation rubber pads (503, 504) are only an exemplary description of the composition of the vibration isolation system, and those skilled in the art may carry out a detailed design of the number, arrangement positions and specific structural forms, etc. of the vibration isolation component structures included in the vibration isolation system according to the modal requirements of the vehicle.

Based on the principle diagram of the vehicle thermal management system described in FIG. 3, the highly integrated thermal management integration module 100 with the refrigerating medium flow channel plate 200 and the coolant flow channel plate 300 as the mounting carriers is formed by integrating the plurality of thermal management components, the thermal management domain controller 400, and the corresponding pipelines as described above. With the support of the corresponding control logic, different thermal management modes of the vehicle thermal management system can be realized.

In this embodiment, on the one hand, the on-off of refrigerating medium valves may be controlled to allow the vehicle thermal management system to be in a "passenger compartment refrigerating mode or battery cooling mode" and an "air source heat pump heating mode or waste heat recovery heat pump heating mode".

in a possible implementation, the vehicle thermal management system is allowed to be in the passenger compartment refrigerating mode or battery cooling mode by turning on the first electronic expansion valve 205, turning off the second electronic expansion valve 206, turning off the first electronic refrigerant valve 207, turning on the second electronic refrigerant valve 208, and turning off the third electronic refrigerant valve 209 by means of the thermal management domain controller 400.

In this mode, the flow direction of the refrigerating medium flows as follows. A high-pressure high-temperature gaseous refrigerating medium generated by the compressor enters the refrigerating medium flow channel plate 200 from a refrigerating medium interface 221 (during which it will flow through the first pressure-temperature sensor 212), and then flows through the second electronic refrigerant valve 208 and out of the refrigerating medium flow channel plate 200 from a refrigerating medium interface 217. After passing through the condenser, the high-pressure high-temperature gaseous refrigerating medium is transformed into a high-pressure medium-temperature liquid refrigerating medium. The high-pressure medium-temperature liquid refrigerating medium enters the refrigerating medium flow channel plate 200 from a refrigerating medium interface 218, and is divided into two branches after passing through the first one-way valve 210, the liquid storage and drying tank 204, and the internal heat exchanger 203 in sequence.

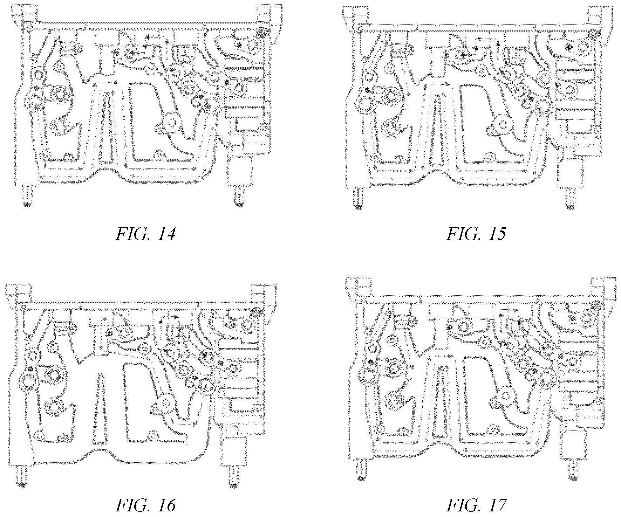

The first branch is that the refrigerating medium flows out of the refrigerating medium flow channel plate 200 from a flow channel opening 219 and into the evaporator in the air-conditioning box to satisfy the refrigerating requirements of the driver and passenger in the internal compartment space. The flow direction of the refrigerating medium within the refrigerating medium flow channel plate 200 in this mode is referenced to FIG. 14.

The second branch is that the refrigerating medium is throttled into a low-pressure low-temperature gas-liquid two-phase refrigerating medium by the first electronic expansion valve 205 inside the refrigerating medium flow channel plate 200, and then flows through the heat exchanger 202 for heat exchange into a low-pressure low-temperature gaseous refrigerating medium (during which it will flow through the third pressure-temperature sensor 214), which is able to cool the power battery. Specifically, the coolant inside the coolant flow plate absorbs the cold from the refrigerating medium via the heat exchanger 202, so as to cool the power battery by using the cold. The flow direction of the refrigerating medium within the refrigerating medium flow channel plate 200 in this mode is referenced to FIG. 15.

The refrigerating medium in the first branch flows through the evaporator and is then transformed into the low-pressure low-temperature gaseous refrigerating medium, the low-pressure low-temperature gaseous refrigerating medium after passing through a refrigerating medium flow channel opening 220 may converge with the low-pressure low-temperature gaseous refrigerating medium in the second branch that has been transformed into such a state after heat exchange in the heat exchanger 202 at the outlet of the heat exchanger 202. After the convergence, the refrigerating medium flows out of refrigerating medium flow channel plate 200 from a refrigerating medium interface 216 and into the compressor to complete a refrigerating medium cycle.

In a possible implementation, the vehicle thermal management system is allowed to be in the air source heat pump heating or waste heat recovery heat pump heating mode by turning on the first electronic expansion valve 205, turning on the second electronic expansion valve 206, turning on the first electronic refrigerant valve 207, turning off the second electronic refrigerant valve 208, and turning on the third electronic refrigerant valve 209.

In this mode, the flow direction of the refrigerating medium flows as follows. The high-pressure high-temperature gaseous refrigerating medium generated by the compressor enters the refrigerating medium flow channel plate 200 from the refrigerating medium interface 221 (during which it will flow through the first pressure-temperature sensor 212), and then flows through the third electronic refrigerant valve 209 and out of the refrigerating medium flow channel plate 200 from the refrigerating medium interface 227. After passing through the condenser in the air-conditioning box, the high-pressure high-temperature gaseous refrigerating medium is transformed into the high-pressure medium-temperature liquid refrigerating medium. The high-pressure medium-temperature liquid refrigerating medium enters the refrigerating medium flow channel plate 200 from a refrigerating medium interface 222, and is divided into two branches after passing through the second one-way valve 211 and the liquid storage and drying tank 204 in sequence.

The first branch is that the refrigerating medium is throttled into a low-pressure low-temperature gas-liquid two-phase refrigerating medium by the second electronic expansion valve 206 inside the refrigerating medium flow channel plate 200, and flows out of the refrigerating medium flow channel plate 200 from the refrigerating medium interface 218. Since the condenser is in communication with the internal compartment space, the air source heat pump heating mode can be realized based on this branch. The flow direction of the refrigerating medium within the refrigerating medium flow channel plate 200 in this mode is referenced to FIG. 16.

The second branch is that the refrigerating medium passes through the high-pressure part of the internal heat exchanger 203 and is throttled into a low-pressure low-temperature gas-liquid two-phase refrigerating medium by the first electronic expansion valve 205 inside the refrigerating medium flow channel plate 200, and then flows through the heat exchanger 202 for heat exchange into a low-pressure low-temperature gaseous refrigerating medium (during which it will flow through the third pressure-temperature sensor 214), thus realizing the waste heat recovery heat pump heating function. Specifically, since heat is needed in the internal compartment space at this time, the heat recovered from the coolant by the heat exchanger may be transferred to the internal compartment space along with the flow of the refrigerating medium. In this way, part of the heat for satisfying the heating requirements of the internal compartment space is the heat recovered from the coolant. The flow direction of the refrigerating medium within the refrigerating medium flow channel plate 200 in this mode is referenced to FIG. 17.

The low-pressure low-temperature gaseous refrigerating medium in the first branch, after flowing through the external heat exchanger and the first electronic refrigerant valve 207 in sequence(during which it will flow through the second pressure-temperature sensor 213), converges with the low-pressure low-temperature gaseous refrigerating medium in the second branch that has been transformed into such a state after heat exchange through the heat exchanger 202 and the low-pressure part of the internal heat exchanger in sequence. After the convergence, the refrigerating medium flows out of the refrigerating medium flow channel plate 200 from the refrigerating medium interface 216 and into the compressor to complete an air-conditioning heating cycle.

In this embodiment, on the other hand, the thermal management integration module 100 may realize at least six different circulation modes by controlling the multi-way valve.

### Mode 1:

In a possible implementation, the thermal management domain controller 400 enables a communication state of the circulation ports 2, 3 and 5 of the multi-way valve 302, so as to allow the thermal management integration module 100 to be in the Mode 1. This mode is as flows.

On the one hand, the coolant in the motor cooling loop flows into the coolant flow channel plate 300 from a coolant interface 308, and is connected to a coolant interface 315 through the circulation port 2 of the multi-way valve 302.

On the other hand, the coolant in a power battery cooling loop (which cools the power battery) flows into the coolant flow channel plate 300 from a coolant interface 309, and is connected to a coolant interface 316 through the circulation port 5 of the multi-way valve 302.

The coolants from the coolant interface 315 and the coolant interface 316 converge and are connected to a coolant interface 314 through the circulation port 3 of the multi-way valve 302. The coolant flowing into the coolant flow channel plate 300 from the coolant interface 314 flows out of the coolant flow channel plate 300 from a coolant interface 307 and then enters the radiator for heat exchange, and the coolant after passing through the radiator flows into the coolant flow channel plate 300 again from a coolant interface 312. The coolant flowing into the coolant flow channel plate 300 is divided into two branches.

In the first branch, the coolant flows into the second water pump 304 through the coolant interface 319, and then flows into the motor cooling loop including the structures such as the motor from a coolant flow channel opening 310.

In the second branch, the coolant flows into the first water pump 303 from the coolant interface 318, and then flows into the battery cooling loop for the power battery from a coolant flow channel opening 311.

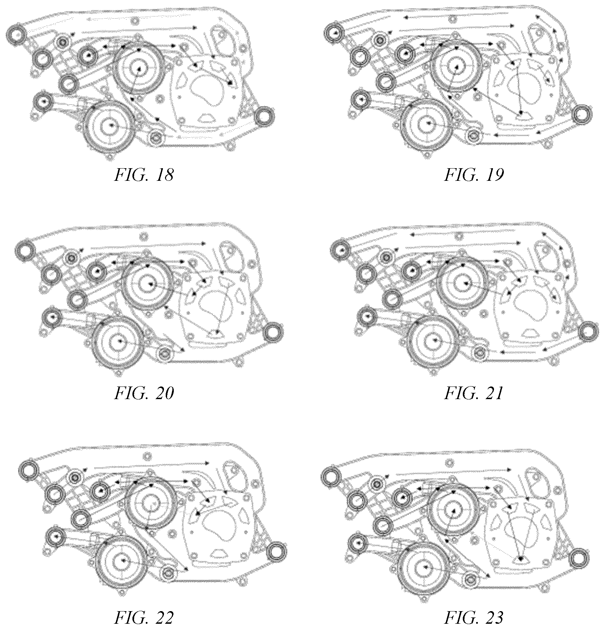

The flow direction of the coolant in the coolant flow channel plate 300 in this mode is referenced to FIG. 18.

### Mode 2:

In a possible implementation, the thermal management domain controller 400 enables a communication state of the circulation ports 1, 2, 3 and 5 of the multi-way valve 302, so as to allow the thermal management integration module 100 to be in the Mode 2. This mode is as flows.

The coolant in the motor cooling loop flows into the coolant flow channel plate 300 from the coolant interface 308, is connected to the coolant interfaces (315, 314) through the circulation ports (2, 3) of the multi-way valve 302, then flows into the coolant flow channel plate 300, and then flows out of the coolant flow channel plate 300 from the coolant interface 307 and enters the radiator for heat exchange, and the coolant after passing through the radiator flows into the coolant flow channel plate 300 from the coolant interface 312 and then flows into the second water pump 304 through the coolant interface 319, and finally flows into the components such as the motor from the coolant flow channel opening 310 to form the motor cooling loop.

The coolant in the power battery cooling loop flows into the coolant flow channel plate 300 from the coolant interface 309, is connected to the coolant interfaces (316, 313) through the circulation ports (5, 1) of the multi-way valves 302 and then enters the heat exchanger 202 through the coolant interfaces 322 for heat exchange, and after heat exchange in the heat exchanger 302, the coolant flows into the coolant flow channel plate 300 from the coolant flow channel opening 323, then flows into the first water pump 303 through the coolant interface 318, and finally flows into the power battery again from the coolant flow channel opening 311, thus forming the battery cooling loop.

The flow direction of the coolant in the coolant flow channel plate 300 in this mode is referenced to FIG. 19.

### Mode 3:

In a possible implementation, the thermal management domain controller 400 enables a communication state of the circulation ports 1, 2, 4 and 5 of the multi-way valve 302, so as to allow the thermal management integration module 100 to be in the Mode 3. This mode is as flows.

The coolant in the motor cooling loop flows into the coolant flow channel plate 300 from the coolant interface 308, is connected to the coolant interfaces 315 and 313 through the circulation ports (2, 1) of the multi-way valve 302, enters the heat exchanger 202 through the coolant interface 322 for heat exchange, and after heat exchange in the heat exchanger 302, the coolant flows into the coolant flow channel plate 300 from the coolant flow channel opening 323, flows into the second water pump 304 through the coolant interface 319, and finally flows into the components such as the motor from the coolant flow channel opening 310 to form the motor cooling loop.

The coolant in the power battery cooling loop flows into the coolant flow channel plate 300 from the coolant interface 309, and is connected to the coolant interfaces 316 and 317 through the circulation ports (4, 5) of the multi-way valve 302. The coolant flows into the first water pump 303 through the coolant interface 318, and finally flows into the power battery from the coolant flow channel opening 311, thus forming the power battery cooling loop.

The flow direction of the coolant in the coolant flow channel plate 300 in this mode is referenced to FIG. 20.

### Mode 4:

In a possible implementation, the thermal management domain controller 400 enables a communication state of the circulation ports 2, 3, 4 and 5 of the multi-way valve 302, so as to allow the thermal management integration module 100 to be in the Mode 4. This mode is as flows.

The coolant in the motor cooling loop flows into the coolant flow channel plate 300 from the coolant interface 308, is connected to the coolant interface 315 and the coolant interface 314 through the circulation ports (2, 3) of the multi-way valve 302 to flow out, and finally flows out of the coolant flow channel plate 300 from the coolant interface 307 and enters the radiator for heat exchange. The coolant after passing through the radiator flows into the coolant flow channel plate 300 from the coolant interface 312, flows into the second water pump 304 through the coolant interface 319, and finally flows into the motor from the coolant flow channel opening 310 to form the motor cooling loop.

The coolant in the power battery cooling loop flows into the coolant flow channel plate 300 from the coolant interface 309, is connected to the coolant interface 316 and the coolant interface 317 through the circulation ports (4, 5) of the multi-way valves 302, then flows into the first water pump 303 through the coolant interface 318, and finally flows into the power battery from the coolant flow channel opening 311, thus forming the battery cooling loop.

The flow direction of the coolant in the coolant flow channel plate 300 in this mode is referenced to FIG. 21.

### Mode 5:

In a possible implementation, the thermal management domain controller 400 enables a communication state of the circulation ports 2, 4 and 5 of the multi-way valve 302, so as to allow the thermal management integration module 100 to be in the Mode 5. This mode is as flows.

The coolant in the motor cooling loop flows into the coolant flow channel plate 300 from the coolant interface 308, is connected to the coolant interface 315 through the circulation port 2 of the multi-way valve 302, and converges with the coolant in the battery cooling loop that flows into the coolant flow channel plate 300 from the coolant interface 309 and is connected to the coolant interface 316 through the circulation port 5 of the multi-way valve 302, and after the convergence, the coolant is connected to the coolant interface 317 through the circulation port 4 of the multi-way valve 302, flows into the coolant interfaces (318, 319), and then is divided into two branches.

In the first branch, the coolant flows into the second water pump 304 from the coolant interface 319, and finally flows into the motor, etc. from the coolant flow channel opening 310 to form the motor cooling loop.

In the second branch, the coolant flows into the first water pump 303 from the coolant interface 318, and finally flows into the power battery from the coolant flow channel opening 311 to form the battery cooling loop.

The flow direction of the coolant in the coolant flow channel plate 300 in this mode is referenced to FIG. 22.

### Mode 6:

In a possible implementation, the thermal management domain controller 400 enables a communication state of the circulation ports 1, 2 and 5 of the multi-way valve 302, so as to allow the thermal management integration module 100 to be in the Mode 5. This mode is as flows.

The coolant in the motor cooling loop flows into the coolant flow channel plate 300 from the coolant interface 308, is connected to the coolant interface 315 through the circulation port 2 of the multi-way valve 302, and converges with the coolant in the power battery cooling loop that flows into the coolant flow channel plate 300 from the coolant interface 309 and is connected to the coolant interface 316 through the circulation port 5 of the multi-way valve 302, and after the convergence, the coolant is connected to the coolant interface 313 through the circulation port 1 of the multi-way valve 302, and flows into the heat exchanger 202 through the coolant interface 322 for heat exchange. After heat exchange in the heat exchanger 302, the coolant flows into the coolant flow channel plate 300 from the coolant flow channel opening 323. The coolant flowing into the coolant flow channel plate 300 is divided into two branches.

In the first branch, the coolant flows into the second water pump 304 from the coolant interface 319, and finally flows into the motor, etc. from the coolant flow channel opening 310 to form the motor cooling loop.

In the second branch, the coolant flows into the first water pump 303 from the coolant interface 318, and finally flows into the power battery from the coolant flow channel opening 311 to form the power battery cooling loop.

The flow direction of the coolant in the coolant flow channel plate 300 in this mode is referenced to FIG. 23.

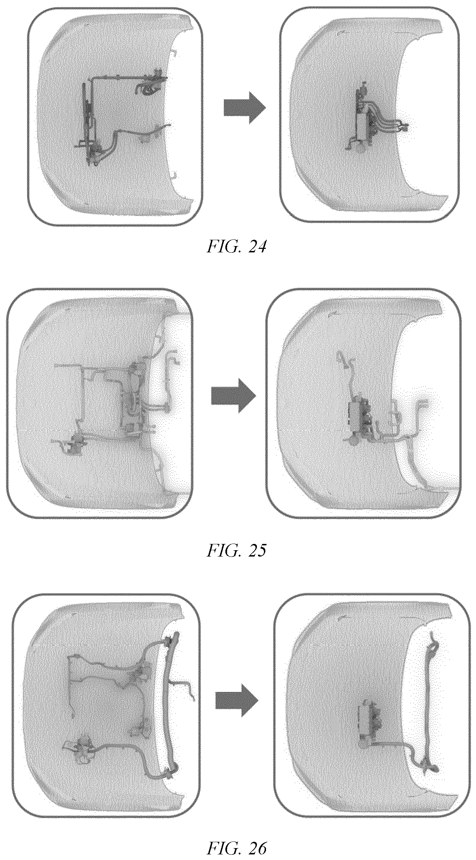

In the thermal management integration module 100 of the invention, the plurality of thermal management components are integrated onto the refrigerating medium flow channel plate 200 and the internal heat exchanger 203 is modified into a structural form that can be integrated into the interior of the refrigerating medium flow channel plate 200 such that the length of the air-conditioning pipeline that is connected to the thermal management integration module 100 can be significantly reduced. For example, referring to FIG. 24, in a possible implementation, in the thermal management integration module 100 of the invention, the length of the air-conditioning pipeline connected to the vehicle is reduced by 40% as compared to the air-conditioning pipeline connected to the vehicle in the non-integration solution.

In the thermal management integration module 100 of the invention, the plurality of thermal management components are integrated to the coolant flow channel plate 300 such that the length of the cooling pipeline connected to the thermal management integration module 100 can be significantly reduced. For example, referring to FIG. 25, in a possible implementation, in the thermal management integration module 100 of the invention, the length of the cooling pipeline connected to the vehicle is reduced by 30% as compared to the cooling pipeline connected to the vehicle in the non-integration solution.

In the thermal management integration module 100 of the invention, the thermal management domain controller 400 that is integrated with the electrical control units of the plurality of thermal management components is in communication with the vehicle domain controller via CAN, with only two low-voltage connectors remained, so that the length of the low-voltage wiring harness connected to the thermal management integration module 100 is significantly reduced. For example, referring to FIG. 26, in a possible implementation, as compared to the low-voltage wiring harness and connectors that are connected to the vehicle in the non-integration solution, in the thermal management integration module 100 of the invention, the length of the vehicle low-voltage wiring harness that is connected to the vehicle is reduced by 70%, and the number of connectors is reduced by 83%.

As can be seen, the vehicle thermal management system of the invention reduces the length of the air-conditioning pipeline, cooling pipeline, and low-voltage wiring harness, increases the utilization rate of the space arrangement of the vehicle front compartment, and the space saved by the application of the thermal management integration module 100 enables the design of expanding the space for a front baggage compartment in the front compartment.

After the vehicle thermal management system of the invention is applied to the vehicle, the total assembly man-hours of the vehicle are saved by about 35% as compared to that in the non-integration solution. Moreover, since the thermal management integration module 100 is integrated and sub-assembled with the air-conditioning pipeline, cooling pipeline, etc., and structures such as a vehicle crossbeam, the overall assembly man-hours of the vehicle can be further reduced, and the production cycle of the vehicle assembly line can be improved.

Heretofore, the technical solutions of the invention have been described with reference to the preferred implementations shown in the accompanying drawings. However, those skilled in the art can readily understand that the scope of protection of the invention is apparently not limited to these specific implementations. Without departing from the principles of the invention, those skilled in the art may make equivalent changes or replacements to related technical features. The technical solutions obtained after these changes or replacements fall within the scope of protection of the invention.

## Claims

1. An internal heat exchanger of an air-conditioning system, the air-conditioning system comprising a condenser, an evaporator and a pipeline, wherein the pipeline comprises a high-pressure part corresponding to a high-pressure refrigerating medium on a downstream side of the condenser and a low-pressure part corresponding to a low-pressure refrigerating medium on a downstream side of the evaporator,
the internal heat exchanger comprising a first refrigerating medium passage in communication with the high-pressure part and a second refrigerating medium passage in communication with the low-pressure part, so as to enable heat exchange between the refrigerating medium flowing through the first refrigerating medium passage and the refrigerating medium flowing through the second refrigerating medium passage,
wherein the internal heat exchanger comprises a plate-shaped base on which at least a part of the first and second refrigerating medium passages is formed.

2. The internal heat exchanger of an air-conditioning system according to claim **1,** wherein the first refrigerating medium passage and/or the second refrigerating medium passage comprises at least one section, and
in the case where the first refrigerating medium passage or the second refrigerating medium passage comprises a plurality of sections, at least some of the plurality of sections are the same or different from each other.

3. The internal heat exchanger of an air-conditioning system according to claim 2, wherein the first refrigerating medium passage and the second refrigerating medium passage have a common wall, so as to
enable heat exchange between the refrigerating medium flowing through the first refrigerating medium passage and the refrigerating medium flowing through the second refrigerating medium passage via the wall.

4. The internal heat exchanger of an air-conditioning system according to claim 1, wherein the first refrigerating medium passage and the second refrigerating medium passage are formed on the plate-shaped base with streamlines having substantially the same trend.

5. The internal heat exchanger of an air-conditioning system according to claim 1, wherein at least a part of the refrigerating medium flowing through the first refrigerating medium passage and at least a part of the refrigerating medium flowing through the second refrigerating medium passage flow in opposite directions.

6. An air-conditioning system, comprising an internal heat exchanger of an air-conditioning system according to any one of claims 1 to 5.

7. A vehicle thermal management system, comprising a controller, a first thermal management unit using a refrigerating medium as a circulation medium, and a second thermal management unit using a coolant as a circulation medium,
wherein the first thermal management unit comprises a plurality of first thermal management components and a refrigerating medium flow channel plate, a plurality of refrigerating medium circulation loops are formed in the refrigerating medium flow channel plate, and the first thermal management components having a connection relationship are connected to each other by means of the corresponding refrigerating medium circulation loop;
wherein the second thermal management unit comprises a plurality of second thermal management components and a coolant flow channel plate, a plurality of coolant circulation loops are formed in the coolant flow channel plate, and the second thermal management components having a connection relationship are connected to each other by means of the corresponding coolant circulation loop;
wherein the first thermal management components comprise electronic expansion valves and/or electronic refrigerant valves, and coils of at least some of the electronic expansion valves and/or electronic refrigerant valves are positioned close to the controller; and
wherein the first thermal management unit is the air-conditioning system according to claim 6, and the plate-shaped base is the refrigerating medium flow channel plate.

8. The vehicle thermal management system according to claim 7, wherein the refrigerating medium flow channel plate is connected to the coolant flow channel plate, and the controller is fixedly connected to the refrigerating medium flow channel plate and/or the coolant flow channel plate.

9. The vehicle thermal management system according to claim 8, wherein the refrigerating medium flow channel plate and the coolant flow channel plate are connected to each other by means of multi-point connection in a thickness direction close to each other.

10. The vehicle thermal management system according to claim 7, wherein the refrigerating medium flow channel plate comprises a refrigerating medium body part and a refrigerating medium cover plate part, the refrigerating medium circulation loops being formed between the refrigerating medium body part and the refrigerating medium cover plate part; and/or
the coolant flow channel plate comprises a coolant body part and a coolant cover plate part, the coolant circulation loops being formed by the coolant body part and the coolant cover plate part.

11. The vehicle thermal management system according to claim 10, wherein refrigerating medium flow channels corresponding to the refrigerating medium circulation loops are formed in the refrigerating medium body part, and the refrigerating medium cover plate part covers the refrigerating medium flow channels; and/or
coolant flow channels corresponding to the coolant circulation loops are formed in the coolant body part, and the coolant cover plate part covers the coolant flow channels.

12. The vehicle thermal management system according to claim 7, wherein refrigerating medium flow channel openings are provided in the refrigerating medium flow channel plate at positions required to be docked with the first thermal management components such that the first thermal management components having a connection relationship are docked with the refrigerating medium flow channel plate via the refrigerating medium flow channel openings and then are in communication with each other by means of the corresponding refrigerating medium circulation loop; and/or
coolant flow channel openings are provided in the coolant flow channel plate at positions required to be docked with the second thermal management components such that the second thermal management components having a connection relationship are docked with the coolant flow channel plate via the coolant flow channel openings and then are in communication with each other by means of the corresponding coolant circulation loop.

13. The vehicle thermal management system according to claim 12, wherein the first thermal management components are in sealed connection with the refrigerating medium flow channel plate at positions corresponding to the refrigerating medium flow channel openings; and/or
the second thermal management components are in sealed connection with the coolant flow channel plate at positions corresponding to the coolant flow channel openings.

14. The vehicle thermal management system according to claim 7, wherein the controller is a thermal management domain controller, the thermal management domain controller comprises a PCBA board, and the coils of the electronic expansion valves and/or electronic refrigerant valves are integrated with the controller in a manner close to the PCBA board.

15. The vehicle thermal management system according to claim 14, wherein the controller comprises a housing, the coils of the electronic expansion valves and/or electronic refrigerant valves and the PCBA board are arranged in the housing.

16. A vehicle, comprising an internal heat exchanger of an air-conditioning system according to any one of claims 1 to 5; or comprising an air-conditioning system according to claim 6; or comprising an internal heat exchanger of an air-conditioning system according to any one of claims 7 to 15.
